# EUROPÄISCHE PATENTSCHRIFT

(11) **EP 4 416 831 B1**
(45) Veröffentlichungstag und Bekanntmachung des Hinweises auf die Patenterteilung: **30.07.2025**
(21) Anmeldenummer: 22812564.7
(22) Anmeldetag: 28.10.2022
(51) Int. Cl.: H02K 9/12, H02K 9/19, H02K 9/197, H02K 9/26

(54) **KÜHLMITTELVERSORGUNGSSYSTEM FÜR EINEN ELEKTRISCHEN FAHRZEUGACHSANTRIEB**
COOLANT SUPPLY SYSTEM FOR AN ELECTRIC AXLE DRIVE SYSTEM
SYSTÈME D'ALIMENTATION EN RÉFRIGÉRANT POUR SYSTÈME D'ENTRAÎNEMENT ÉLECTRIQUE D'ESSIEU

(30) Priorität: 14.01.2022 DE 102022100804
(43) Veröffentlichungstag der Anmeldung: 21.08.2024
(73) Patentinhaber: AUDI AG, 85057 Ingolstadt (DE)
(72) Erfinder: GREITER, Ivo, 85117 Eitensheim (DE)
(74) Vertreter: Bierschneider, Walter
(86) Internationale Anmeldenummer: PCT/EP2022/080218
(87) Internationale Veröffentlichungsnummer: WO 2023/134893

(56) Entgegenhaltungen:
- EP-B1- 3 193 434
- WO-A1-2019/008220
- GB-A- 164 114
- US-A- 3 240 967
- US-A- 4 496 862
- US-A1- 2005 023 909
- US-A1- 2021 083 555

## Beschreibung

Die Erfindung betrifft ein Kühlmittelversorgungssystem für einen elektrischen Fahrzeugachsantrieb nach dem Oberbegriff des Anspruches 1.

Ein solcher Fahrzeugachsantrieb kann eine nasslaufende Elektromaschine aufweisen, in der der Stator, insbesondere die Wickelköpfe der Statorwicklungen, sowie der Rotor aktiv mit Kühlmittel (das heißt mit Öl) gekühlt werden. Der Rotor ist über einen Luftspalt vom Stator beabstandet. Der Elektromaschinen-Innenraum ist für eine Rotorinnenkühlung und/oder für eine Statorkühlung mit Kühlmittel beaufschlagbar.

Es hat sich gezeigt, dass kühlmittelhaltige Luft im Luftspalt zwischen dem Rotor und dem Stator zu Schleppverlusten beim Rotor führt, wodurch sich der Wirkungsgrad der Elektromaschine reduziert.

Vor diesem Hintergrund sind in einer gattungsgemäßen Elektromaschine gemäß US 2021/0083555 A1 im Rotor und/oder im Stator Druckluftleitungen integriert, die in Strömungsverbindung mit dem Luftspalt sind. Für eine Druckluftquelle wird eine Luftströmung erzeugt, die in Axialrichtung den Luftspalt durchströmt. Auf diese Weise wird der Luftspalt im Wesentlichen frei von Kühlmittel gehalten, wodurch Rotor-Schleppverluste reduzierbar sind.

In der US 2021/0083555 A1 verlaufen die Druckluftleitungen innerhalb des Stators und/oder des Rotors. Die Bauteilgeometrie des Stators und/oder des Rotors weicht daher fertigungstechnisch aufwendig von einer herkömmlichen Rotor/Stator-Bauteilgeometrie ab.

Der EP 3 193 434 B1 und aus der EP 3 032 709 A1 sind weitere Elektromaschinen bekannt. Aus der US 2005/023909 A1 ist ein Generator für Kraftfahrzeuge bekannt. Die WO 2019/008220 A1 offenbart eine elektrische Maschine. Aus der US 4 496 862 A ist eine Hochgeschwindigkeits-Generatorentlüftung für einen Luftspalt bekannt. Die GB 164 114 A offenbart Verbesserungen an dynamoelektrischen Maschinen. Aus der US 3 240 967 A ist eine Kühlungseinrichtung für elektrische Maschinen bekannt.

Die Aufgabe der Erfindung besteht darin, ein Kühlmittelversorgungssystem für einen elektrischen Fahrzeugachsantrieb bereitzustellen, bei dem die Elektromaschine im Vergleich zum Stand der Technik in einfacher Weise mit einem höheren Wirkungsgrad betreibbar ist.

Die Aufgabe ist durch die Merkmale des Anspruches 1 gelöst. Bevorzugte Weiterbildungen der Erfindung sind in den Unteransprüchen offenbart.

Erfindungsgemäß wird ein Kühlmittelversorgungssystem für eine Elektromaschine bereitgestellt, in deren Elektromaschinengehäuse ein Stator mit einem Rotor zusammenwirkt, der über einen Luftspalt vom Stator beabstandet ist. Die Elektromaschine ist als eine nasslaufende, kühlmitteldurchströmte Elektromaschine realisiert, in der der Elektromaschinen-Innenraum für eine Rotorinnenkühlung und/oder für eine Statorkühlung mit Kühlmittel beaufschlagt ist. Das Kühlmittelversorgungssystem weist zudem eine Strömungseinheit auf, mittels der eine Luftströmung erzeugbar ist. Die Luftströmung durchströmt in Axialrichtung den Luftspalt. Auf diese Weise wird der Luftspalt im Wesentlichen frei von kühlmittelhaltiger Luft gehalten, wodurch Rotor-Schleppverluste reduzierbar sind. Gemäß dem kennzeichnenden Teil des Anspruches 1 weist die Rotor/Stator-Anordnung axial beidseitig jeweils einen Luftströmungsraum (das heißt im konkreten Ausführungsbeispiel der Rotorraum) auf. Die beiden Luftströmungsräume sind in Strömungsverbindung mit dem zwischengeordneten Luftspalt. Erfindungsgemäß sind die Luftströmungsräume (das heißt die Rotorräume) in einen lufteinlassseitigen Luftströmungsraum und in einen luftauslassseitigen Luftströmungsraum unterteilt. Die von der Strömungseinheit generierte Luftströmung strömt über den Lufteinlass in den lufteinlassseitigen Luftströmungsraum ein. Der weitere Strömungsweg der Luftströmung führt durch den Luftspalt bis in den auslassseitigen Luftströmungsraum. Von dort wird die Luftströmung über einen Luftauslass aus dem auslassseitigen Luftströmungsraum abgeführt.

Erfindungsgemäß sind somit keine geometrischen Anpassungen an den Rotor und/oder Stator erforderlich, um die Luftströmung durch den Luftspalt zu bewerkstelligen. Vielmehr kann erfindungsgemäß fertigungstechnisch einfach auf eine herkömmliche Bauteilgeometrie des Rotors beziehungsweise des Stators zurückgegriffen werden.

In einer technischen Umsetzung können die beiden Luftströmungsräume, der Luftspalt sowie die Strömungseinheit in einem geschlossenen Luftkreislauf eingebunden sein. In dem Luftkreislauf strömt die von der Strömungseinheit erzeugte Luftströmung über den Lufteinlass in einen einlassseitigen Luftströmungsraum ein. Von dort wird die Luftströmung axial durch den Luftspalt zum auslassseitigen Luftströmungsraum geführt. Vom auslassseitigen Luftströmungsraum wird die Luftströmung weiter über den Luftauslass bis zur Strömungseinheit rückgeführt.

Im Elektromaschinengehäuse weist die Stator-Rotor-Anordnung axial beidseitig jeweils einen stirnseitigen, freien Gehäuseraum auf. Die erfindungsgemäßen Luftströmungsräume sind Bestandteile dieser Gehäuseräume. Bevorzugt ist jeder der beiden stirnseitigen Gehäuseräume mit einer Kühlmittel-Abtrennung aufgeteilt in einen radial äußeren Wickelkopfraum und in einen davon weitgehend fluiddicht abgetrennten radial inneren Rotorraum, in dem der Rotor angeordnet ist. Im radial äußeren Wickelkopfraum ist dagegen der Stator mitsamt Statorwicklungen positioniert. Auf diese Weise kann der sich im Elektromaschinenbetrieb stark erwärmende Stator zielgerichteter mit Kühlmittel versorgt werden. Zudem wird die Kühlmittelversorgung des Wickelkopfraums vom Rotorraum weitgehend entkoppelt. Insbesondere können die Wickelköpfe des Stators bevorzugt komplett mit Kühlmittel umströmt werden. In diesem Fall kann der Wickelkopfraum im Wesentlichen komplett mit Kühlmittel gefüllt sein.

Bei der obigen Unterteilung des jeweiligen Gehäuseraums in den radial äußeren Wickelkopfraum und in den radial inneren Rotorraum bildet speziell der radial innere Rotorraum den erfindungsgemäßen Luftströmungsraum. In diesem Fall sind speziell die radial inneren Rotorräume der Elektromaschine in dem Luftkreislauf eingebunden. Vor diesem Hintergrund mündet der Lufteinlass in den einlassseitigen Rotorraum, während der Luftauslass in den auslassseitigen Rotorraum einmündet.

Im Hinblick auf eine betriebssichere Statorkühlung kann der Wickelkopfraum Bestandteil eines Stator-Hydraulikkreises sein, der bevorzugt entkoppelt ist vom Luftkreislauf. Der Stator-Hydraulikkreislauf kann eine Zulaufstelle aufweisen, an der Kühlmittel von einem Kühlmittelreservoir in den Wickelkopfraum zuführbar ist, und zwar insbesondere mit Hilfe einer im Kühlmittelreservoir angeordneten Zuführpumpe. Zudem kann der Stator-Hydraulikkreis eine vom Luftauslass separate Ablaufstelle aufweisen, von der Kühlmittel aus dem Wickelkopfraum in Richtung Kühlmittelreservoir rückgeführt werden kann.

Alternativ und/oder zusätzlich kann eine Rotorinnenkühlung bereitgestellt sein, bei der der Rotor Bestandteil eines Rotor-Hydraulikkreislaufes ist. Der Rotor-Hydraulikkreislauf kann ebenfalls weitgehend entkoppelt sein von dem Luftkreislauf sowie vom Stator-Hydraulikkreislauf.

Die oben erwähnte Kühlmittel-Abtrennung zwischen dem Wickelkopfraum und dem radial inneren Rotorraum bildet einen Boden des Rotorraums. Während des Elektromaschinenbetriebs kann sich auf dem Rotorraum-Boden ein vom Wickelkopfraum austretendes Leckage-Kühlmittel und/oder ein von der Rotorinnenkühlung austretendes Leckage-Kühlmittel bzw. ein von den Lagern austretendes Kühlmittel sammeln. Bevorzugt ist es, wenn der Luftauslass am Rotorraum-Boden des auslassseitigen Rotorraums angeordnet ist. Auf diese Weise kann über den Luftauslass nicht nur die Luftströmung abgeführt werden, sondern zusätzlich auch das Leckage-Kühlmittel aus dem auslassseitigen Rotorraum abgeführt werden. Das Gemisch aus Luftströmung und Leckage-Kühlmittel kann über eine Rückführleitung bis in das Kühlmittelreservoir rückgeführt werden.

Um eine kühlmittelhaltige Luft innerhalb des Luftspaltes zu vermeiden, ist es bevorzugt, wenn dem Lufteinlass mittelbar oder unmittelbar ein Abscheider prozesstechnisch vorgeschaltet ist. Mit Hilfe des Abscheiders kann die über den Lufteinlass in das Elektromaschinengehäuse einströmende Luftströmung von Kühlmitteltropfen gereinigt werden.

In einer ersten Ausführungsvariante kann der Luftauslass über eine Rückführleitung mit einer Saugseite einer Rückführpumpe verbunden sein. Die Rückführpumpe wirkt als Luft-/Kühlmittel-Saugpumpe bei der das Gemisch aus Luftströmung und Leckage-Kühlmittel aus dem Rotorraum absaugbar ist. Auf diese Weise wird im Rotorraum ein Unterdruck gebildet, wodurch zwischen dem Getrieberaum und dem Rotorraum ein Druckgefälle entsteht, das zu der Luftströmung führt. Die Rückführpumpe kann bevorzugt innerhalb des Kühlmittelreservoirs positioniert sein und an ihrer Druckseite eine Steigleitung aufweisen. Über die Steigleitung kann das Gemisch aus Luftströmung und Leckage-Kühlmittel in das Kühlmittelreservoir einströmen. Zudem kann der Lufteinlass ohne direkten Pumpenanschluss in den luftgefüllten oberen Innenraum des Kühlmittelreservoirs münden.

Alternativ dazu kann in einer zweiten Ausführungsvariante in dem Kühlmittelreservoir eine Luftzuführpumpe angeordnet sein, die als Luft-Druckpumpe wirkt. Die Luftzuführpumpe kann mit ihrer Saugseite in Strömungsverbindung mit dem luftgefüllten oberen Innenraum des Kühlmittelreservoirs sein. In diesem Fall kann die Luftzuführpumpe im luftgefüllten oberen Innenraum des Kühlmittelreservoirs Luft absaugen, die über eine Luftzufuhrleitung zum Lufteinlass und von dort weiter durch die Elektromaschine gefördert wird. Der Luftauslass kann in diesem Fall über eine Rückführleitung mit dem Kühlmittelreservoir verbunden sein. Die Rückführleitung kann dabei ohne direkten Pumpenanschluss in das Kühlmittelreservoir münden. Bevorzugt kann die Rückführleitung innerhalb des Kühlmittelreservoirs in eine Steigleitung übergehen, über die das Gemisch aus Luftströmung und Leckage-Kühlmittel in das Kühlmittelreservoir einströmt.

Bevorzugt ist es, wenn der Luftzuführpumpe an ihrer Saugseite ein Abscheider vorgeschaltet ist, mit dem die abgesaugte Luftströmung von Kühlmitteltropfen gereinigt wird.

Eine bauraumreduzierte sowie konstruktiv einfache Gestaltung ergibt sich, wenn die Strömungseinheit als eine Zweifachpumpe ausgebildet ist, in der die Zuführpumpe für die Statorkühlung und/oder für die Rotorinnenkühlung sowie die Rückführpumpe beziehungsweise Zuführpumpe für die Luftströmung zu einer Zweifachpumpe zusammengefasst sind. In diesem Fall sind die in der Zweifachpumpe verbauten Einzelpumpen mit einer gemeinsamen Antriebswelle antreibbar.

Die Kühlmittel-Abtrennung ist geschlossenflächig (das heißt düsenfrei) ausgebildet und in Dichtkontakt mit den, in Axialrichtung einander gegenüberliegenden Stirnwänden des Elektromaschinengehäuses. Unter einer fluiddichten oder strömungsdichten Abdichtung des Wickelkopfraums vom Rotorraum ist nicht notwendigerweise eine hermetische Abdichtung zu verstehen, das heißt eine komplett dichte Abdichtung. Vielmehr kann es im Elektromaschinenbetrieb zu einer geringfügigen Kühlmittel-Leckage durch die Dichtflächen der Kühlmittel-Abtrennung in den Rotorraum kommen.

Der Rotor-Hydraulikreis kann speziell für eine Rotorinnenkühlung ausgelegt sein, bei der die Rotorwelle als Hohlwelle ausgebildet ist. Deren Hohlraum kann zumindest teilweise mit Kühlmittel durchströmt werden. Nach erfolgter Rotorinnenkühlung kann das Kühlmittel in den Rotorraum abgeführt werden, wo es sich am Rotorraum-Boden sammelt. Wie bereits erwähnt kann am Rotorraum-Boden zumindest eine Rotorraum-Ablaufstelle ausgebildet sein, über die das Kühlmittel in das Kühlmittelreservoir rückführbar ist.

Nachfolgend sind zwei Ausführungsbeispiele der Erfindung anhand der beigefügten Figuren beschrieben.

Es zeigen:
- Fig. 1 und 2: jeweils schematische Darstellung eines ersten und eines zweiten Ausführungsbeispiels für ein Kühlmittelversorgungssystem; sowie
- Fig. 3: eine schematische Darstellung eines nicht von der Erfindung umfassten Vergleichsbeispiels.

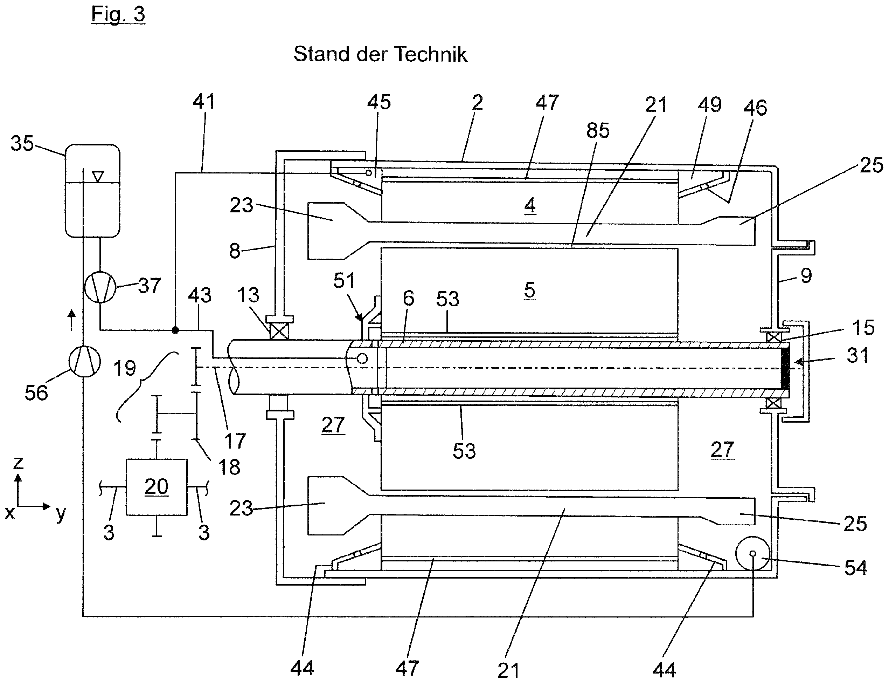

Für einfacheres Verständnis der Erfindung wird zunächst Bezug auf die Figur 3 genommen, in der in grob schematischer Darstellung eine Antriebsvorrichtung für eine Fahrzeugachse eines zweispurigen Fahrzeugs angedeutet ist. Die Antriebsvorrichtung weist eine Elektromaschine auf, die beispielhaft im Quereinbau achsparallel zu den, zu den Fahrzeugrädern geführten Flanschwellen 3 angeordnet ist. In einem Gehäuse 2 der Elektromaschine ist ein Stator 4 mit einem damit zusammenwirkenden Rotor 5 angeordnet. Die Rotorwelle 6 ist an axial gegenüberliegenden Gehäusewänden 8, 9 des Elektromaschinengehäuses 2 in Lageröffnungen unter Zwischenordnung von Drehlagern 13, 15 drehgelagert.

Die Rotorwelle 6 der Elektromaschine ist drehfest mit einer Getriebeeingangswelle 17 einer Getriebeanordnung 19 verbunden, die auf die beiden Flanschwellen 3 abtreibt. In der Figur 3 ist die Getriebeanordnung 19 aus einer Getriebestufe 18 und einem Achsdifferenzial 20 aufgebaut.

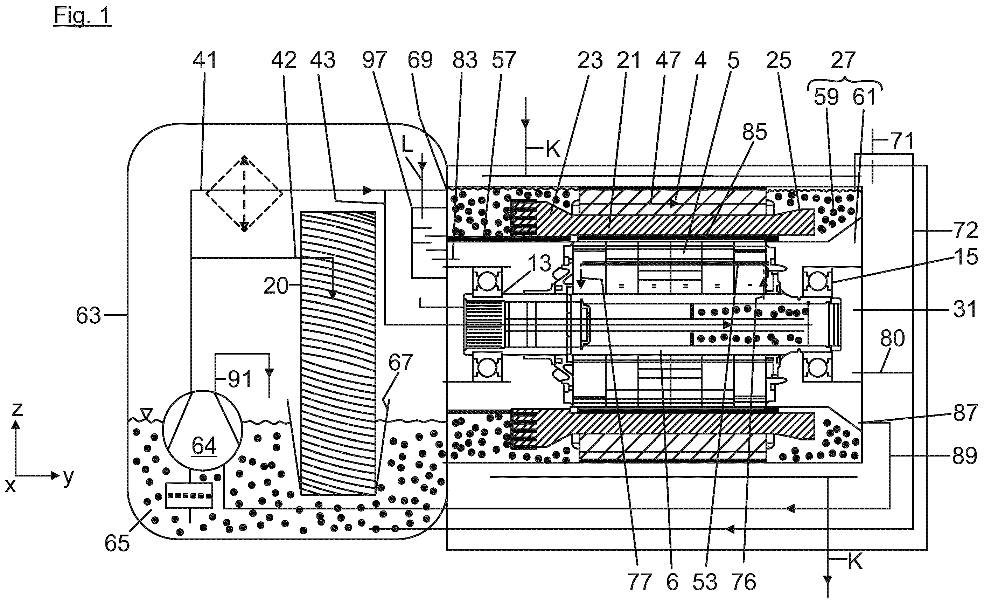

In der Figur 3 weist der Stator 4 eine Vielzahl von Statorwicklungen auf, von denen in der Figur 1 lediglich zwei Statorwicklungen 21 angedeutet sind. Jede Statorwicklung 21 weist axial beidseitig jeweils einen Wickelkopf 23, 25 auf, der in einen stirnseitigen, freien Gehäuseraum 27 einragt. Jeder Gehäuseraum 27 ist in einem später beschriebenen Öl-Hydraulikkreis eingebunden, mit dessen Hilfe der jeweilige Wickelkopf-Raum 27 mit Öl beaufschlagbar ist, um die Wickelköpfe 23, 25 des Stators 4 zu kühlen. In jedem der Gehäuseräume 27 bewegt sich ein Öl/Luftgemisch in Wirbelströmung um die sich mit hoher Drehzahl drehende Rotorwelle 5.

In der in der Figur 3 rechten Lageranordnung ist ein Wellenende der Rotorwelle 6 in einem Nabenabschnitt 31 über das Drehlager 15 drehgelagert.

Der Öl-Hydraulikkreis weist einen Öltank 35 auf, der über eine Saugleitung mit einer Zuführpumpe 37 verbunden ist. Von der Zuführpumpe 37 führt eine Druckleitung zu Öl-Versorgungsleitungen 41, 43. Mittels der Versorgungsleitung 41 wird Öl in einen radial äußeren umlaufenden Ringspalt 45 gespeist. Von dort wird das Öl über radial äußere Statorkanäle 47 zu einem weiteren Ringspalt 49 im rechten Gehäuseraum 27 geführt. Die beiden Ringspalte 45, 49 sind über Ölspritzringe 44 vom jeweiligen Gehäuseraum 27 getrennt. Jeder der Ölspritzringe 44 weist in Umfangsrichtung verteilte Düsen 46 auf, über die Öl in den jeweiligen Gehäuseraum 27 einspritzbar ist.

Mittels der Versorgungsleitung 43 wird Öl durch die Rotorwelle 6 geführt und über eine Strömungsverbindung 51 in radial inneren Rotorkanälen 53 bis in den rechten Gehäuseraum 27 geleitet. Am Gehäuseboden des Elektromaschinengehäuses befindet sich in der Figur 3 eine Absaugung 54, über die sich am Gehäuseboden sammelndes Öl mit Hilfe einer Rückführpumpe 56 in den Öltank 35 rückführbar ist.

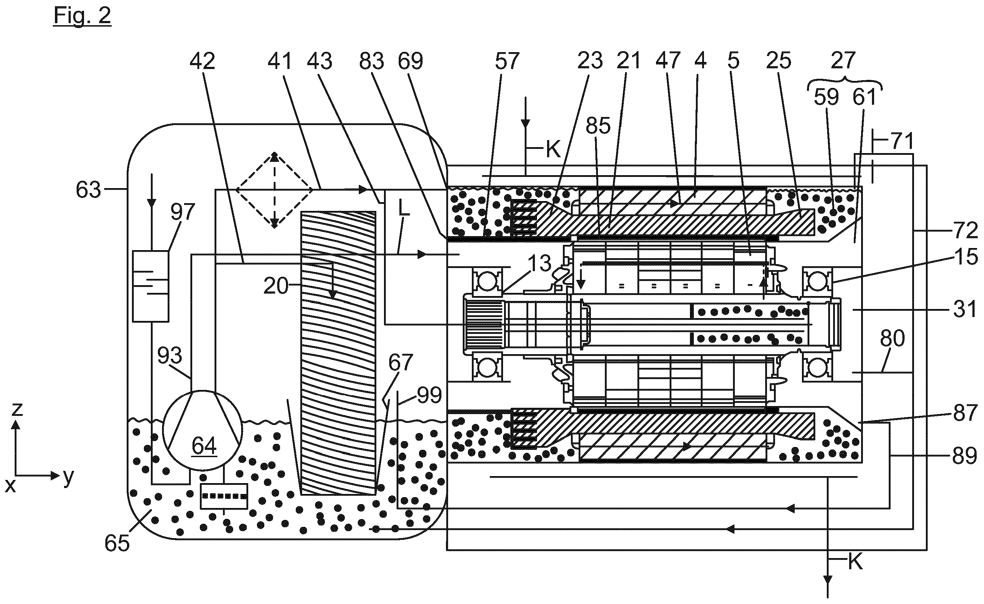

Im Unterschied zur Figur 3 wird in der Figur 1 oder 2 erfindungsgemäß der Stator 4 mit seinen Wickelköpfen 23, 25 nicht mehr mittels einer Luft/Öl-Wirbelströmung gekühlt. Vielmehr ist der Gehäuseraum 27 des Elektromaschinengehäuses 2 mit Hilfe einer Kühlmittel-Abtrennung 57 aufgeteilt in einen radial äußeren ringförmigen Wickelkopfraum 59 und in einen radial inneren Rotorraum 61. Im Wickelkopfraum 59 ist der Stator 4 mit seinen Statorwicklungen 21 positioniert, während davon fluiddicht abgetrennt im radial inneren Rotorraum 61 der Rotor 5 angeordnet ist. Erfindungsgemäß kommt daher der Stator 4 nicht mehr in Kühlkontakt mit einer sich im Rotorraum 61 bildenden Wirbelströmung. Vielmehr wird in der Figur 1 der Wickelkopfraum 59 im Elektromaschinenbetrieb komplett mit dem Kühlmittel gefüllt, so dass speziell die Wickelköpfe 23, 25 vollständig von Kühlmittel umströmt sind, wodurch sich gegebenenfalls ein im Vergleich zur Wirbelstrom-Kühlung besserer Wirkungsgrad einstellen kann.

Ein Kern der Erfindung besteht erstens darin, das Kühlmittel im Aggregat an einer Stelle (das heißt im Wickelkopfraum 59) unterzubringen, an der es ohnehin gebraucht wird. Zweitens wird mit der Erfindung das Kühlmittel weitgehend aus dem Rotorraum 61 ferngehalten. Beim Einsatz der aus dem Stand der Technik bekannten Spritzölkühlung aus Fig 3 besteht nämlich ein Problem darin, dass je nach Temperatur des Kühlmittels sehr unterschiedliche Mengen an Kühlmittel an der Wicklung hängenbleiben. Um eine ausreichende Menge an Kühlmittel für die Druckpumpe bereitzustellen, muss daher vergleichsweise viel Kühlmittel eingefüllt werden.

Wie aus der Figur 1 hervorgeht, ist die Elektromaschine analog zur Figur 3 im Quereinbau im Fahrzeug verbaut, und zwar mit einer in der Fahrzeugquerrichtung y, das heißt achsparallel zur Fahrzeugachse, verlaufenden Rotorwelle 6. Zudem sind in der Figur 1 die Elektromaschine und die Getriebeanordnung 19 in der Fahrzeugquerrichtung y nebeneinander angeordnet. Das Getriebegehäuse 63 der Getriebeanordnung 19 ist ferner unmittelbar an das Elektromaschinengehäuse 2 angeflanscht. Im Getriebegehäuse 63 ist die Getriebeanordnung 19 positioniert, die gemäß der Figur 3 die Getriebestufe 18 sowie das Achsdifferenzial 20 aufweist.

Ein weiterer Kern der Erfindung besteht darin, dass auf einen separaten Öltank (Bezugsziffer 35 in der Figur 3) verzichtet wird und anstelle dessen das Getriebegehäuse 63 in Doppelfunktion zusätzlich auch als Öltank bzw. als Kühlmittelreservoir wirkt, in dem sich eine Ölsäule 65 bildet. Zudem sind die in der Figur 3 gezeigten Zuführpumpe 37 und Rückführpumpe 56 zu einer gemeinsamen Zweifachpumpe 64 zusammengefasst. In der Zweifachpumpe 64 werden die Zuführ- und Rückführpumpen 37, 56 mit einer gemeinsamen (nicht gezeigten) Antriebswelle von einem Elektromotor angetrieben.

Wie aus der Figur 1 weiter hervorgeht, ist im Getriebegehäuse 63 bodenseitig als Hohlkörper eine nach oben offene Schale 67 positioniert, die einen kühlmittelfreien, nach oben offenen Bauraum 69 von der Ölsäule 65 abschirmt. In den Bauraum 69 ragt teilweise das Achsdifferenzial 20 ein. Im Normalfall erfolgt eine Einspritzschmierung, in der Öl über die Getriebe-Versorgungsleitung 42 in Richtung Achsdifferenzial 20 geführt wird. Das von dem Achsdifferenzial 20 abtropfende Kühlmittel sammelt sich am Boden der Schale 67 und wird von dort gegebenenfalls über eine nicht gezeigte Ablaufstelle in die Rückführleitung 89 geleitet, die an die Saugseite der Zweifachpumpe 64 angeschlossen ist. Alternativ dazu reicht es gegebenenfalls aus, wenn das Zahnrad des Differenzials das Kühlmittel aus der Schale 67 herausschleudert. Zudem wäre es möglich, eine kleine Öl-Zulaufbohrung in der Schale 67 auszubilden, um bei einem Pumpenausfall trotzdem eine Notschmierung des Zahnrades zu gewährleisten.

Im Elektromaschinenbetrieb wird mittels der Zweifachpumpe 64 Öl über die Versorgungsleitung 41 an einer getriebenahen Zulaufstelle 69 in den Wickelkopfraum 59 eingespeist. An einer axial gegenüberliegenden, getriebefernen Ablaufstelle 71 wird das Öl aus dem Wickelkopfraum 59 abgeführt. Die getriebeferne Wickelkopfraum-Ablaufstelle 71 kann als eine Blende, eventuell auch als ein Überdruckventil, realisiert sein. Die Blende bzw. das Überdruckventil ist erforderlich, um auch bei sehr hohen Beschleunigungen, insbesondere Querbeschleunigungen, das Öl in den Wickelkopfräumen 59 zu halten. Die Wickelkopfraum-Ablaufstelle 71 ist zudem über eine erste Rückführleitung 72 in Strömungsverbindung mit der im Getriebegehäuse 63 befindlichen Ölsäule 65, in die hinein die erste Rückführleitung 72 mündet. Zudem zweigt eine Ölzuführungsleitung 80 von der Rückführleitung 72 ab. Mittels der Ölzuführungsleitung 80 wird das Lager 15 im Nabenabschnitt 31 mit Öl versorgt. Das Öl gelangt dann durch das Lager 15 in den Rotorraum 61, von wo es über eine Rückführleitung 89 abgesaugt wird.

In der Figur 1 wird mit Hilfe des Kühlmittelversorgungssystems eine Rotorinnenkühlung durchgeführt, bei der sich eine in der Figur 1 skizzierte Ölführung ergibt. Die Ölführung in der Rotorwelle 6 ist so ausgestaltet, dass sowohl das getriebenahe Lager 13 als auch das getriebeferne Lager 15 von innen gekühlt werden. Ziel der Ölführung ist ein möglichst geringer Temperaturunterschied zwischen dem Innenring und dem Außenring des jeweiligen Lager 13, 15.

Gemäß der Ölführung wird über die Versorgungsleitung 43 das Öl in den Hohlraum der als Hohlwelle ausgeführten Rotorwelle 6 eingespeist, und zwar bis auf axialer Höhe des getriebefernen Drehlagers 15. Von dort wird das Öl an einer getriebefernen Strömungsverbindung 76 in die Rotorkanäle 53 geleitet. In den Rotorkanälen 53 strömt das Öl im weiteren Verlauf in gegenläufiger Richtung bis zu einer getriebenahen Strömungsverbindung 77, an der das Öl wieder in den Hohlraum der Rotorwelle 6 rückgeführt wird.

Ein weiterer Kern der Erfindung besteht darin, dass das Kühlmittelversorgungssystem einen zusätzlichen geschlossenen Luftkreislauf aufweist. In dem geschlossenen Luftkreislauf sind folgende Komponenten eingebunden, nämlich die Zweifachpumpe 64, ein Lufteinlass 83, der einlassseitige Rotorraum 61, ein Luftspalt 85 zwischen dem Rotor 5 und dem Stator 4 sowie ein Luftauslass 87 am auslassseitigen Rotorraum 61. Der Luftauslass 87 am auslassseitigen Rotorraum 61 ist an der Bodenseite der Kühlmittel-Abtrennung 57 positioniert. Auf der Bodenseite der Kühlmittel-Abtrennung 57 sammelt sich während des Elektromaschinenbetriebs ein Leckage-Kühlmittel, das aus dem Wickelkopfraum 59 und aus den Lagern 13 und 15 austritt, die beide ölgeschmiert sind. Zudem sammelt sich ein von der Rotorinnenkühlung austretendes Leckage-Kühlmittel. Über den Luftauslass 87 wird nicht nur das Leckage-Kühlmittel, sondern zusätzlich auch eine später beschriebene Luftströmung L abgeführt, die im geschlossenen Luftkreislauf zirkuliert wird.

Der Luftauslass 87 ist in der Fig. 1 über eine Rückführleitung 89 mit einer Saugseite der in der Zweifachpumpe 64 integrierten Rückführpumpe verbunden. Mittels der in der Zweifachpumpe 64 integrierten Rückführpumpe wird das Gemisch aus der Luftströmung L und dem Leckage-Kühlmittel aus dem auslassseitigen Rotorraum 61 abgesaugt, und zwar unter Bildung von Unterdruck im auslassseitigen Rotorraum 61, wodurch zwischen dem Getrieberaum 63 und dem Rotorraum 61 ein Druckgefälle entsteht, das zu der Luftströmung führt. Die in der Zweifachpumpe 64 integrierte Rückführpumpe weist an ihrer Druckseite eine Steigleitung 91 auf, über die das Gemisch aus Luftströmung L und Leckage-Kühlmittel in das Getriebegehäuse 63 einströmt. Dies erfolgt unter Bildung von Überdruck im Getriebegehäuse 63.

Wie aus der Fig. 1 weiter hervorgeht, mündet der Lufteinlass 83 frei, das heißt ohne direkten Pumpenanschluss in den luftgefüllten oberen Innenraum des Getriebegehäuses 63. Auf diese Weise ergibt sich zwischen dem luftgefüllten oberen Innenraum des Getriebegehäuses 63 und dem einlassseitigen Rotorraum 61 ein Druckgefälle, wodurch sich die Luftströmung L bildet.

In der Fig. 2 ist eine alternative Ausführungsvariante gezeigt, bei der in der Zweifachpumpe 64 eine nicht gezeigte Luftzufuhrpumpe integriert ist. Diese saugt aus dem luftgefüllten oberen Innenraum des Getriebegehäuses 63 Luft ab, die über eine Luftzufuhrleitung 93 mit dem Lufteinlass 83 verbunden ist. Zudem ist in der Fig. 2 der Luftauslass 87 über eine Rückführleitung 89 mit dem Getriebegehäuse 63 verbunden. Die Rückführleitung 89 mündet in der Fig. 2 ohne direkten Pumpenanschluss in das Getriebegehäuse 63. Vielmehr endet die Rückführleitung 89 mit einer Steigleitung 99, über die das Gemisch aus Luftströmung L und Kühlmittel in das Getriebegehäuse 63 gespeist wird.

Wie aus den Fig. 1 und 2 hervorgeht, ist dem Lufteinlass 87 mittelbar oder unmittelbar ein Ölabscheider 97 vorgeschaltet. Mithilfe des Ölabscheiders 97 wird die Luftströmung L von Kühlmitteltropfen gereinigt, bevor die Luftströmung L in den einlassseitigen Rotorraum 61 eintritt.

In den Figuren 1 und 2 ist die Elektromaschine zusätzlich in einem Kühlwasserkreislauf K integriert, in dem das Kühlwasser den Außenumfang des Elektromaschinengehäuses 2 umströmt.

### BEZUGSZEICHENLISTE:

- 2: Elektromaschinengehäuse
- 3: Flanschwellen
- 4: Stator
- 5: Rotor
- 6: Rotorwelle
- 8, 9: Gehäusewand
- 11: Lageröffnung
- 13, 15: Drehlager
- 17: Getriebeeingangswelle
- 18: Getriebestufe
- 19: Getriebeanordnung
- 20: Achsdifferenzial
- 21: Statorwicklung
- 23, 25: Wickelkopf
- 27: Elektromaschinen-Raum
- 31: Nabenabschnitt
- 33: Dichtelement
- 35: Kühlmitteltank
- 37: Zuführpumpe
- 41, 42, 43: Versorgungsleitungen
- 44: Ölspritzring
- 45: Ringspalt
- 46: Düsen
- 47: radial äußerer Statorkanal
- 49: Ringspalt
- 51: Strömungsverbindung
- 53: radial innerer Statorkanal
- 54: Absaugung
- 56: Rückführpumpe
- 57: Kühlmittel-Abtrennung
- 59: Wickelkopfraum
- 61: Rotorraum
- 63: Getriebegehäuse
- 64: Zweifachpumpe
- 65: Kühlmittelsäule
- 66: Steigleitung
- 67: Hohlkörper
- 68: Hohlkörper-Ablaufstelle
- 69: Wickelkopfraum-Zulaufstelle
- 71: Wickelkopfraum-Ablaufstelle
- 72: weitere Rückführleitung
- 76: getriebeferne Strömungsverbindung
- 77: getriebenahe Strömungsverbindung
- 80: Kühlmittelzuführungsleitung
- 83: Lufteinlass
- 85: Luftspalt
- 87: Luftauslass
- 89: Rückführleitung
- 91: Steigleitung
- 93: Luftzuführleitung
- 97: Ölabscheider
- 99: Steigleitung
- L: Luftströmung
- K: Kühlwasserkreislauf

## Patentansprüche

1. Kühlmittelversorgungssystem für einen elektrischen Fahrzeugachsantrieb mit einer nasslaufenden, kühlmitteldurchströmten Elektromaschine, in deren Elektromaschinengehäuse (2) ein Stator (4) mit einem Rotor (5) zusammenwirkt, der über einen Luftspalt (85) vom Stator (4) beabstandet ist, wobei der Elektromaschinen-Innenraum für eine Rotorinnenkühlung und/oder für eine Statorkühlung mit Kühlmittel beaufschlagt ist, und wobei das Kühlmittelversorgungssystem eine Strömungseinheit (64) aufweist, die in einen geschlossenen Luftkreislauf eingebunden ist, und mittels der eine Luftströmung (L) erzeugbar ist, die in Axialrichtung den Luftspalt (85) durchströmt, wodurch der Luftspalt (85) im Wesentlichen frei von Kühlmittel gehalten ist, um Rotor-Schleppverluste zu reduzieren, **dadurch gekennzeichnet, dass** axial beidseitig der Rotor-/Stator-Anordnung sich jeweils ein Luftströmungsraum (61) befindet, dass die beiden Luftströmungsräume (61) in Strömungsverbindung mit dem Luftspalt (85) sind, und dass die beiden Luftströmungsräume (61) in einen einlassseitigen Luftströmungsraum (61), in den die Luftströmung (L) über einen Lufteinlass (83) einströmt, und in einen auslassseitigen Luftströmungsraum (61) mit einem Luftauslass (87) unterteilt sind, aus dem die Luftströmung (L) abströmt.

2. Kühlmittelversorgungssystem nach Anspruch 1, **dadurch gekennzeichnet, dass** die beiden Luftströmungsräume (61), der Luftspalt (85) und die Strömungseinheit (64) in einem Luftkreislauf eingebunden sind, bei dem die von der Strömungseinheit (64) erzeugte Luftströmung (L) über den Lufteinlass (83) in den einlassseitigen Luftströmungsraum (61) einströmt, axial durch den Luftspalt (85) führbar ist und vom auslassseitigen Luftströmungsraum (61) über den Luftauslass (87) zur Strömungseinheit (64) rückführbar ist.

3. Kühlmittelversorgungssystem nach einem der Ansprüche 1 oder 2, **dadurch gekennzeichnet, dass** die Rotor/Stator-Anordnung axial beidseitig jeweils einen stirnseitigen Gehäuseraum (27) aufweist, und dass der Luftströmungsraum (61) Bestandteil des stirnseitigen Gehäuseraums (27) ist, und dass im Elektromaschinengehäuse (2) eine Kühlmittel-Abtrennung (57) angeordnet ist, die jeden Gehäuseraum (27) aufteilt in einen radial äußeren Wickelkopfraum (59) und einen davon weitgehend fluiddicht abgetrennten, radial inneren Rotorraum (61), in dem der Rotor (5) angeordnet ist und der den Luftströmungsraum (61) bildet.

4. Kühlmittelversorgungssystem nach Anspruch 3, **dadurch gekennzeichnet, dass** der Lufteinlass (83) in den einlassseitigen Rotorraum (61) mündet, während der Luftauslass (83) in den auslassseitigen Rotorraum (61) mündet.

5. Kühlmittelversorgungssystem nach einem der Ansprüche 3 oder 4, **dadurch gekennzeichnet, dass** der Wickelkopfraum (59) Bestandteil eines Stator-Hydraulikkreises ist, der eine Zulaufstelle (69) aufweist, an der Kühlmittel von einem Kühlmittelreservoir (63) in den Wickelkopfraum (59) zuführbar ist, insbesondere mittels einer Zuführpumpe, und dass der Stator-Hydraulikkreis eine Ablaufstelle (71) aufweist, von der Kühlmittel aus dem Wickelkopfraum (59) in Richtung Kühlmittelreservoir (63) rückführbar ist.

6. Kühlmittelversorgungssystem nach Anspruch 3, 4 oder 5, **dadurch gekennzeichnet, dass** die Kühlmittel-Abtrennung (57) einen Boden des Rotorraums (61) bildet, auf dem sich ein vom Wickelkopfraum (59) austretendes Leckage-Kühlmittel und/oder ein von der Rotorinnenkühlung austretendes Leckage-Kühlmittel und/oder ein von den Lagern (13, 15) austretendes Kühlmittel sammelt, und dass der Luftauslass (87) am Rotorraum-Boden des auslassseitigen Rotorraums (61) angeordnet ist, über den sowohl Leckage-Kühlmittel als auch die Luftströmung (L) abführbar sind.

7. Kühlmittelversorgungssystem nach einem der vorhergehenden Ansprüche, **dadurch gekennzeichnet, dass** dem Lufteinlass (83) mittelbar oder unmittelbar ein Abscheider (97) vorgeschaltet ist, mittel dem die Luftströmung (L) von Kühlmitteltropfen reinigbar ist.

8. Kühlmittelversorgungssystem nach einem der Ansprüche 6 oder 7, **dadurch gekennzeichnet, dass** der Luftauslass (87) über eine Rückführleitung (89) mit einer Saugseite einer Rückführpumpe verbunden ist, die das Gemisch aus Luftströmung (L) und Leckage-Kühlmittel aus dem auslassseitigen Rotorraum (61) absaugt, und zwar unter Bildung von Unterdruck im Rotorraum (61), wodurch zwischen dem Kühlmittelreservoir (63) und dem Rotorraum (61) ein Druckgefälle entsteht, das zu der Luftströmung führt, und dass insbesondere die Rückführpumpe an ihrer Druckseite eine Steigleitung (91) aufweist, über die das Gemisch aus Luftströmung (L) und Leckage-Kühlmittel in das KühlmittelReservoir (63) einströmt, und/oder dass insbesondere der Lufteinlass (83) ohne direkten Pumpenanschluss in den luftgefüllten oberen Innenraum des Kühlmittelreservoirs (63) mündet, so dass sich die Luftströmung (L) durch den Lufteinlass (83) aufgrund eines Druckgefälles zwischen dem Kühlmittelreservoirs (63) und dem Rotorraum (61) ergibt.

9. Kühlmittelversorgungssystem nach Anspruch 6 oder 7, **dadurch gekennzeichnet, dass** in dem Kühlmittelreservoirs (63) eine Luftzuführpumpe angeordnet ist, die aus dem luftgefüllten oberen Innenraum des Kühlmittelreservoirs (63) Luft absaugt und über eine Luftzuführleitung (93) mit dem Lufteinlass (83) verbunden ist, und dass der Luftauslass (87) über eine Rückführleitung (89) mit dem Kühlmittelreservoir (63) verbunden ist, die ohne direkten Pumpenanschluss in das Kühlmittelreservoir (63) mündet.

10. Kühlmittelversorgungssystem nach einem der Ansprüche 5 bis 9, **dadurch gekennzeichnet, dass** die Zuführpumpe für die Statorkühlung und/oder die Rotorinnenkühlung sowie die Rückführpumpe beziehungsweise Zuführpumpe für die Luftströmung (L) zu einer, die Strömungseinheit bildenden Zweifachpumpe (64) zusammengefasst sind, in der die Pumpen mit einer gemeinsamen Antriebswelle antreibbar sind.

## Claims

1. Coolant supply system for an electric vehicle axle drive having a wet-running electric machine which is passed through by a coolant flow and in the electrical machine housing (2) of which a stator (4) interacts with a rotor (5) separated from the stator (4) via an air gap (85), wherein the electric machine interior is impinged with coolant for rotor internal cooling and/or for stator cooling, and wherein the coolant supply system has a flow unit (64), which is incorporated into a closed air circuit, and by means of which an air flow (L) flowing in the axial direction through the air gap (85) can be generated, as a result of which the air gap (85) is kept substantially free of coolant to reduce rotor drag losses, **characterized in that** located axially on both sides of the rotor/stator assembly is in each case an air flow chamber (61), **in that** the two air flow chambers (61) are fluidically connected to the air gap (85), and **in that** the two air flow chambers (61) are subdivided into an inlet-proximal air flow chamber (61) into which the air flow (L) flows by way of an air inlet (83), and into an outlet-proximal air flow chamber (61) having an air outlet (87) out of which the air flow (L) flows.

2. Coolant supply system according to Claim 1, **characterized in that** the two air flow chambers (61), the air gap (85) and the flow unit (64) are incorporated into an air circuit in which the air flow (L) generated by the flow unit (64) flows through the air inlet (83) into the inlet-proximal air flow chamber (61), is able to be guided axially through the air gap (85) and is able to be returned from the outlet-proximal air flow chamber (61) via the air outlet (87) to the flow unit (64).

3. Coolant supply system according to one of Claims 1 and 2, **characterized in that** the rotor/stator assembly has in each case axially on both sides a frontal housing space (27), and **in that** the air flow chamber (61) is a constituent part of the frontal housing space (27), and **in that** disposed in the electrical machine housing (2) is a coolant separation (57) which divides each housing space (27) into a radially outer winding head space (59) and a radially inner rotor space (61) which is separated from the latter in a largely fluid-tight manner and in which the rotor (5) is disposed and which forms the air flow chamber (61).

4. Coolant supply system according to Claim 3, **characterized in that** the air inlet (83) opens into the inlet-proximal rotor space (61), while the air outlet (83) opens into the outlet-proximal rotor space (61).

5. Coolant supply system according to one of Claims 3 and 4, **characterized in that** the winding head space (59) is a constituent part of a stator hydraulic circuit which has an infeed point (69) at which coolant from a coolant reservoir (63) is able to be fed into the winding head space (59), in particular by means of a feed pump, and **in that** the stator hydraulic circuit has an outfeed point (71) from which coolant from the winding head space (59) is able to be returned in the direction of the coolant reservoir (63).

6. Coolant supply system according to Claim 3, 4 or 5, **characterized in that** the coolant separation (57) forms a base of the rotor space (61) on which a leakage coolant escaping from the winding head space (59) and/or a leakage coolant escaping from the rotor internal cooling and/or a coolant escaping from the bearings (13, 15) collects, and **in that** the air outlet (87) is disposed on the rotor space base of the outlet-proximal rotor space (61) by way of which both leakage coolant as well as the air flow (L) are able to be discharged.

7. Coolant supply system according to one of the preceding claims, **characterized in that** a separator (97), by means of which coolant droplets are able to be removed from the air flow (L), is disposed indirectly or directly upstream of the air inlet (83).

8. Coolant supply system according to one of Claims 6 and 7, **characterized in that** the air outlet (87) is connected via a return line (89) to a suction side of a recirculation pump which extracts the mixture of air flow (L) and leakage coolant from the outlet-proximal rotor space (61), specifically by forming a vacuum in the rotor space (61), which causes a pressure gradient between the coolant reservoir (63) and the rotor space (61), causing the air flow, and **in that** in particular the recirculation pump has on its pressure side a riser line (91) by way of which the mixture of air flow (L) and leakage coolant flows into the coolant reservoir (63), and/or **in that** in particular the air inlet (83) opens into the air-filled upper interior of the coolant reservoir (63) without a direct pump connection so that the air flow (L) through the air inlet (83) is the result of a pressure gradient between the coolant reservoir (63) and the rotor space (61).

9. Coolant supply system according to Claim 6 or 7, **characterized in that** an air feed pump, which extracts air from the air-filled upper interior of the coolant reservoir (63) and is connected to the air inlet (83) via an air supply line (93), is disposed in the coolant reservoir (63), and **in that** the air outlet (87) is connected to the coolant reservoir (63) via a return line (89) which opens into the coolant reservoir (63) without a direct pump connection.

10. Coolant supply system according to one of Claims 5 to 9, **characterized in that** the feed pump for stator cooling and /or the rotor internal cooling as well as the return pump or feed pump for the air flow (L) are combined so as to form a double pump (64) which forms the flow unit and in which the pumps are able to be driven by a common drive shaft.

## Revendications

1. Système d'apport de fluide de refroidissement pour un entraînement d'essieu de véhicule électrique comprenant une machine électrique à fonctionnement humide et traversée par un fluide de refroidissement, dans le carter de machine électrique (2) de laquelle un stator (4) interagit avec un rotor (5) qui est espacé du stator (4) par un entrefer (85), l'intérieur de la machine électrique étant alimenté en fluide de refroidissement pour un refroidissement interne de rotor et/ou pour un refroidissement de stator, et le système d'apport de fluide de refroidissement comportant une unité d'écoulement (64) qui est intégrée dans un circuit d'air fermé, et au moyen de laquelle un flux d'air (L) peut être généré, lequel s'écoule à travers l'entrefer (85) dans la direction axiale, ce qui permet de maintenir l'entrefer (85) sensiblement exempt de fluide de refroidissement, afin de réduire les pertes de traînée de rotor, **caractérisé en ce que**, axialement et des deux côtés de l'agencement rotor/stator, se trouve respectivement un espace d'écoulement d'air (61), **en ce que** les deux espaces d'écoulement d'air (61) sont en liaison fluidique avec l'entrefer (85), et **en ce que** les deux espaces d'écoulement d'air (61) sont divisés en un espace d'écoulement d'air côté admission (61) dans lequel le flux d'air (L) pénètre par une entrée d'air (83), et en un espace d'écoulement d'air côté sortie (61) comportant une sortie d'air (87), d'où le flux d'air (L) s'échappe.

2. Système d'apport de fluide de refroidissement selon la revendication 1, **caractérisé en ce que** les deux espaces d'écoulement d'air (61), l'entrefer (85) et l'unité d'écoulement (64) sont intégrés dans un circuit d'air dans lequel le flux d'air (L) généré par l'unité d'écoulement (64) pénètre par l'entrée d'air (83) dans l'espace d'écoulement d'air côté admission (61), peut être guidé axialement à travers l'entrefer (85) et peut être ramené de l'espace d'écoulement d'air côté sortie (61) vers l'unité d'écoulement (64) par l'intermédiaire de la sortie d'air (87).

3. Système d'apport de fluide de refroidissement selon l'une quelconque des revendications 1 ou 2, **caractérisé en ce que** l'agencement rotor/stator présente, axialement et des deux côtés, un espace de carter frontal (27) respectif, **en ce que** l'espace d'écoulement d'air (61) fait partie de l'espace de carter frontal (27), et **en ce qu'**un dispositif de séparation de fluide de refroidissement (57) est disposé dans le carter de machine électrique (2), lequel divise chaque espace de carter (27) en un espace de tête de bobinage (59) radialement extérieur et un espace de rotor (61) radialement intérieur qui en est séparé de manière notablement étanche aux fluides, dans lequel est disposé le rotor (5) et qui forme l'espace d'écoulement d'air (61).

4. Système d'apport de fluide de refroidissement selon la revendication 3, **caractérisé en ce que** l'entrée d'air (83) débouche dans l'espace de rotor côté admission (61), tandis que la sortie d'air (83) débouche dans l'espace de rotor côté sortie (61).

5. Système d'apport de fluide de refroidissement selon l'une quelconque des revendications 3 ou 4, **caractérisé en ce que** l'espace de tête de bobinage (59) fait partie d'un circuit hydraulique de stator qui comporte un point d'alimentation (69) auquel du fluide de refroidissement peut être acheminé depuis un réservoir de fluide de refroidissement (63) dans l'espace de tête de bobinage (59), en particulier au moyen d'une pompe d'alimentation, et **en ce que** le circuit hydraulique de stator comporte un point de sortie (71) depuis lequel le fluide de refroidissement peut être ramené de l'espace de tête de bobinage (59) en direction du réservoir de fluide de refroidissement (63).

6. Système d'apport de fluide de refroidissement selon la revendication 3, 4 ou 5, **caractérisé en ce que** le dispositif de séparation de fluide de refroidissement (57) forme un fond de l'espace de rotor (61), sur lequel s'accumulent un fluide de refroidissement de fuite sortant de l'espace de tête de bobinage (59) et/ou un fluide de refroidissement de fuite sortant du refroidissement interne de rotor et/ou un fluide de refroidissement sortant des paliers (13, 15), et **en ce que** la sortie d'air (87) est disposée sur le fond d'espace de rotor de l'espace de rotor côté sortie (61), au moyen de laquelle il est possible d'évacuer à la fois le fluide de refroidissement de fuite et le flux d'air (L).

7. Système d'apport de fluide de refroidissement selon l'une quelconque des revendications précédentes, **caractérisé en ce qu'**un séparateur (97) est indirectement ou directement raccordé en amont de l'entrée d'air (83), au moyen duquel il est possible d'éliminer du flux d'air (L) des gouttelettes de fluide de refroidissement.

8. Système d'apport de fluide de refroidissement selon l'une quelconque des revendications 6 ou 7, **caractérisé en ce que** la sortie d'air (87) est reliée, par l'intermédiaire d'une conduite de retour (89), à un côté aspiration d'une pompe de retour qui aspire le mélange de flux d'air (L) et de fluide de refroidissement de fuite depuis l'espace de rotor côté sortie (61) en créant une dépression dans l'espace de rotor (61), générant ainsi un gradient de pression entre le réservoir de fluide de refroidissement (63) et l'espace de rotor (61) qui conduit au flux d'air, et/ou **en ce que** la pompe de retour présente en particulier sur son côté sous pression une conduite montante (91) par l'intermédiaire de laquelle le mélange de flux d'air (L) et de fluide de refroidissement de fuite pénètre dans le réservoir de fluide de refroidissement (63), et/ou, en particulier, **en ce que** l'entrée d'air (83) débouche sans raccordement direct à une pompe dans l'espace intérieur supérieur rempli d'air du réservoir de fluide de refroidissement (63), de sorte que le flux d'air (L) à travers l'entrée d'air (83) résulte d'un gradient de pression entre le réservoir de fluide de refroidissement (63) et l'espace de rotor (61).

9. Système d'apport de fluide de refroidissement selon la revendication 6 ou 7, **caractérisé en ce qu'**une pompe d'alimentation en air qui aspire l'air depuis l'espace intérieur supérieur rempli d'air du réservoir de fluide de refroidissement (63) est disposée dans le réservoir de fluide de refroidissement (63) et est reliée par l'intermédiaire d'une conduite d'alimentation en air (93) à l'entrée d'air (83), et **en ce que** la sortie d'air (87) est reliée au réservoir de fluide de refroidissement (63) par l'intermédiaire d'une conduite de retour (89) qui débouche dans le réservoir de fluide de refroidissement (63) sans raccordement direct à une pompe.

10. Système d'apport de fluide de refroidissement selon l'une quelconque des revendications 5 à 9, **caractérisé en ce que** la pompe d'alimentation destinée au refroidissement de stator et/ou au refroidissement interne de rotor ainsi que la pompe de retour ou la pompe d'alimentation destinée au flux d'air (L) sont combinées en une pompe double (64) formant l'unité d'écoulement, dans laquelle les pompes peuvent être entraînées par un arbre d'entraînement commun.
